Europäisches Patentamt

European Patent Office

Office européen des brevets

(19)

(11) Numéro de publication: **0 287 446 B1**

(12) **FASCICULE DE BREVET EUROPEEN**

(45) Date de publication du fascicule du brevet:
03.10.90

(51) Int. Cl.⁵: **F16L 37/08**

(21) Numéro de dépôt: **88400867.3**

(22) Date de dépôt: **12.04.88**

(54) Dispositif de liaison rapide d'un embout à un appareil récepteur.

(30) Priorité: **17.04.87 FR 8705790**

(43) Date de publication de la demande:
**19.10.88 Bulletin 88/42**

(45) Mention de la délivrance du brevet:
**03.10.90 Bulletin 90/40**

(84) Etats contractants désignés:
**DE GB IT**

(56) Documents cités:
**DE-U- 7 933 996**
**US-A- 2 805 089**
**US-A- 3 151 891**
**US-A- 4 007 953**

(73) Titulaire: **AUTOMOBILES PEUGEOT, 75, avenue de la Grande Armée, F-75116 Paris(FR)**
Titulaire: **AUTOMOBILES CITROEN, 62 Boulevard Victor-Hugo, F-92200 Neuilly-sur-Seine(FR)**

(72) Inventeur: **Petiot, Jean-Paul, 42, route d'Orsay, F-91460 Larciyssis(FR)**

(74) Mandataire: **Boivin, Claude, 9, rue Edouard-Charton, F-78000 Versailles(FR)**

ACTORUM AG

## Description

Pour raccorder un conduit souple à un appareil récepteur , on engage jusqu'à présent un embout fixé au conduit sur un tube faisant saillie par rapport à l'appareil récepteur, le verrouillage étant assuré par un jonc élastique en forme de segment circulaire qui, en position d'équilibre, est engagé partiellement dans une gorge interne de l'embout et dans une gorge externe du tube. Le jonc comporte à ses extrémités des oreilles de manoeuvre qui traversent la paroi de l'embout, et permettent de dilater le jonc pour le dégager de la gorge du tube, ce qui permet de séparer l'un de l'autre le conduit et l'appareil récepteur.

Mais la présence du tube en saillie est gênante, par exemple lors du chargement de l'appareil récepteur dans un camion.

Le document DE-U-79 33996 décrit un dispositif de liaison rapide du type ci-dessus, l'appareil récepteur présentant un alésage dans lequel un embout solidaire du conduit peut être engagé et qui est muni d'une gorge interne coopérant avec une gorge externe de l'embout. pour le logement du jonc de verrouillage, le jonc présentant deux bras de manoeuvre qui font saillie par rapport au plan général du jonc en étant orientés dans une direction sensiblement perpendiculaire à ce plan. Mais, dans ce dispositif, les bras de manoeuvre font saillie du côté de l'alésage de l'appareil récepteur et cet alésage est prévu dans une partie saillante de l'appareil récepteur, ce qui est nécessaire pour pouvoir agir sur les bras de manoeuvre.

La présente invention a pour objet un dispositif de liaison rapide qui ne nécessite pas la présence d'une partie en saillie sur l'appareil récepteur.

Ce dispositif est caractérisé en ce que les bras de manoeuvre font saillie par rapport au plan général du jonc vers l'extérieur, donc vers l'extérieur par rapport à l'alésage de l'appareil récepteur, en ce que l'embout comporte un évidement extérieur pour le passage des bras du jonc, et en ce que la partie du jonc en forme de segment a un rayon qui va en croissant progressivement depuis les coudes le reliant aux bras au moins jusqu'à deux points intermédiaires à fond de gorge externe.

On a décrit ci-après, à titre d'exemple non limitatif, un mode de réalisation du dispositif de liaison selon l'invention, avec référence au dessin annexé dans lequel:

La Figure 1 est une vue en coupe axiale d'un embout fixé selon l'invention dans l'alésage d'une pièce réceptrice;

La Figure 2 est une vue en coupe suivant II-II de la Figure 1;

La Figure 3 est une vue en perspective du jonc de verrouillage.

Au dessin, on voit un embout 1 qui est solidaire d'un tuyau souple 2 et destiné à être fixé à un appareil récepteur 4; celui-ci comporte un alésage 3 dans lequel l'embout 1 peut être engagé. Cet embout présente à son extrémité une gorge annulaire extérieure dans laquelle est disposé un joint d'étanchéité 5. Pour verrouiller l'embout 1 dans l'alésage 3 il est prévu un jonc élastique 6 en forme de segment de cercle, qui peut s'engager partiellement dans une gorge 7 de l'embout et dans une gorge 8 de l'alésage, la gorge 7 ayant une profondeur au moins égale à l'épaisseur du jonc.

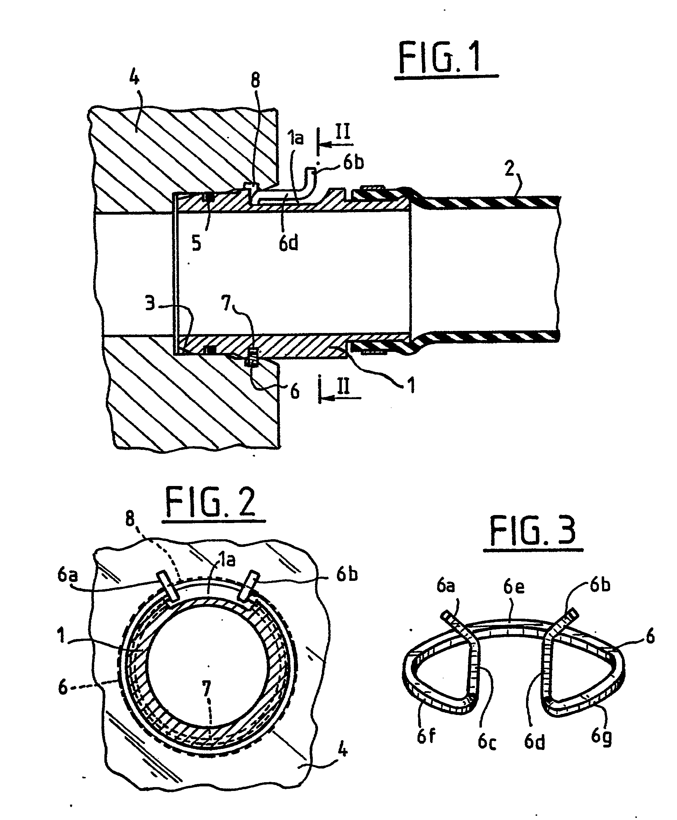

Le jonc 6 présente à son extrémité deux oreilles 6a et 6b qui sont prévues aux extrémités de bras 6c et 6d qui font saillie vers l'extérieur par rapport au plan général du jonc, en étant orientés dans une direction sensiblement perpendiculaire à ce plan, comme on le voit à la Figure 3. La partie du jonc en forme de segment présente un rayon qui va en croissant progressivement depuis les coudes la reliant aux bras 6c et 6d, jusqu'à sa partie médiane 6e.

En variante, pour avoir un meilleur appui du jonc, on peut envisager un jonc dont le rayon reste constant de 6f à 6g en passant par 6e, la variation de rayon étant limitée à la partie reliant 6f et 6g aux coudes des bras 6c et 6d.

Lorsque l'embout 1 est monté dans l'alésage 3, les oreilles 6a et 6b se trouvent à l'extérieur de cet alésage, les bras 6c et 6d étant disposés parallèlement à l'axe commun de l'embout 1 et de l'alésage 3 en étant tournés vers l'extérieur et en faisant saillie par rapport à l'appareil récepteur 4, du côté opposé à l'alésage de cet appareil; l'embout comporte un évidement interne 1a, au droit de ces oreilles. Il est possible de rapprocher les oreilles 6a et 6b l'une de l'autre de façon à dégager le jonc 6 de la gorge 8 et à libérer ainsi l'embout 1 de l'alésage 3 de l'organe récepteur 4.

## Revendications

1. Dispositif de liaison rapide d'un embout à un appareil récepteur, à l'aide d'un jonc élastique (6) en forme de segment qui, en position d'équilibre, est engagé partiel lement dans une gorge interne (8) de l'alésage (3) et partiellement dans une gorge externe (7) de l'embout (1), et comporte deux oreilles de manœuvre (6a et 6b), dans lequel l'appareil récepteur (4) présente un alésage (3) dans lequel j'embout (1) solidaire du conduit (2) peut être engagé et qui est muni de ladite gorge interne (8) coopérant avec ladite gorge externe (7) de l'embout (1) pour le logement du jonc de verrouillage (6), le jonc présentant deux bras de manœuvre (6c et 6d) qui font saillie par rapport au plan général du jonc en étant orientés dans une direction sensiblement perpendiculaire à ce plan, caractérisé en ce que les bras de manœuvre (6c et 6d) font saillie par rapport au plan général du jonc vers l'extérieur, donc vers l'extérieur par rapport à l'alésage (3) de l'appareil récepteur (4), en ce que l'embout (1) comporte un évidement extérieur (1a) pour le passage des bras (6c et 6d) du jonc, et en ce que la partie du jonc en forme de segment a un rayon qui va en croissant progressivement depuis les coudes le reliant aux bras (6c et 6d) au moins jusqu'à deux points (6g et 6f) intermédiaires à fond de gorge externe (8).

2. Dispositif selon la revendication 1, caractérisé en ce que le jonc a un rayon constant sur la plus grande partie de sa périphérie entre les points (6f et 6g) intermédiaires.

3. Dispositif selon la revendication 1, caractérisé en ce que la partie du jonc en forme de segment a un rayon qui va en croissant progressivement jusqu'à sa partie médiane (6e).

## Patentansprüche

1. Vorrichtung zur Schnellverbindung eines Ansatzstückes mit einer Aufnahmeeinrichtung mittels eines segmentförmigen elastischen Sprengrings (6), der in der Gleichgewichtstellung teilweise in eine innere Nut (8) der Bohrung (3) und teilweise in eine äußere Nut (7) des Ansatzstückes (1) eingreift und zwei Betätigungs-Griffstücke (6a) und (6b) aufweist, bei welcher die Aufnahmeeinrichtung (4) eine Bohrung (3) aufweist, in welche das mit der Leitung (2) fest verbundene Ansatzstück (1) einsteckbar ist und die mit der besagten inneren Nut (8) versehen ist, welche mit besagter äußerer Nut (7) am Ansatzstück (1) zusammenwirkt zur Anordnung des Verriegelungssprengrings (6), wobei der Sprengring zwei Betätigungsarme (6c und 6d) aufweist, die aus der allgemeinen Ebene des Sprengrings herausragen, indem sie in einer Richtung im wesentlichen senkrecht zu dieser Ebene orientiert sind, dadurch gekennzeichnet, daß die Betätigungsarme (6c und 6d) in Bezug auf die allgemeine Ebene des Sprengrings nach außen ragen, also nach außen in bezug auf die Bohrung (3) der Aufnahmeeinrichtung (4), daß das Ansatzstück (1) eine äußere Vertiefung (1a) für den Durchgang der Arme (6c und 6d) des Sprengrings besitzt und daß der segmentförmige Teil des Sprengrings einen Radius aufweist, der von den ihn mit den Armen (6c und 6d) verbindenden Krümmungen an progressiv anwächst, bis mindestens zu zwei am Grund der äußeren Nut (8) liegenden Zwischenpunkten (6g und 6f).

2. Vorrichtung nach Anspruch 1, dadurch gekennzeichnet, daß der Sprengring auf dem größten Teil seiner Peripherie zwischen den Zwischenpunkten (6f und 6g) einen konstanten Radius aufweist.

3. Vorrichtung nach Anspruch 1, dadurch gekennzeichnet, daß der segmentförmige Teil des Sprengrings einen Radius aufweist, der bis zu seinem Mittelabschnitt (6e) progressiv anwächst.

## Claims

1. Device for quick coupling an end-piece to a receiving apparatus, by means of a resilient ring (6) in the form of a segment which, in the balanced position, is partially engaged in an internal groove (8) of the bore (3) and partially in an external groove (7) of the endpiece (1), and comprises two operating lugs (6a and 6b), in which the receiving apparatus (4) has a bore (3) in which the end-piece (1) fast with the pipe (2) may be engaged and which is provided with said internal groove (8) cooperating with said external groove (7) of the endpiece (1) for housing the locking ring (6), the ring having two operating arms (6c and 6d) which project with respect to the general plane of the ring while being oriented in a direction substantially perpendicular to this plane, characterized in that the operating arms (6c and 6d) project outwardly with respect to the general plane of the ring, so outwardly with respect to the bore (3) of the receiving apparatus (4), in that the end-piece (1) comprises an external recess (1a) for the passage of the arms (6c and 6d) of the ring and in that the portion of the ring in the form of a segment has a radius which increases progressively from the bends connecting it to the arms (6c and 6d) at least as far as two intermediate points (6g and 5f) at the bottom of the external groove (8).

2. Device according to claim 1, characterized in that the ring has a constant radius over the largest part of its periphery between the intermediate points (6f and 6g).

3. Device according to claim 1, characterized in that the portion of the ring in the form of a segment has a radius which increases progressively as far as its median part (6e).

FIG.1

FIG.2

FIG.3